# EUROPÄISCHE PATENTSCHRIFT

(11) **EP 3 717 807 B1**
(45) Veröffentlichungstag und Bekanntmachung des Hinweises auf die Patenterteilung: **01.03.2023**
(21) Anmeldenummer: 18759062.5
(22) Anmeldetag: 13.08.2018
(51) Int. Cl.: F16J 15/06, F16J 15/3296, G01M 3/16, G01M 3/18, G01M 3/40, G01M 13/00

(54) **DICHTUNGSANORDNUNG**
SEAL ASSEMBLY
DISPOSITIF DE JOINT D'ÉTANCHÉITÉ

(30) Priorität: 28.11.2017 DE 102017010979; 28.11.2017 DE 102017010981; 06.02.2018 DE 102018000935
(43) Veröffentlichungstag der Anmeldung: 07.10.2020
(73) Patentinhaber: Carl Freudenberg KG, 69469 Weinheim (DE)
(72) Erfinder: NAHRWOLD, Olaf, 67071 Ludwigshafen (DE); SINDLINGER, Stefan, 69469 Weinheim (DE); TRABER, Boris, 69493 Hirschberg (DE); MOELLER, Sascha, 68642 Bürstadt (DE)
(86) Internationale Anmeldenummer: PCT/EP2018/071917
(87) Internationale Veröffentlichungsnummer: WO 2019/105606

(56) Entgegenhaltungen:
- DE-A1-102014 010 269
- JP-A- S60 245 874
- US-A1- 2012 119 448
- US-A1- 2017 172 018

## Beschreibung

Die Erfindung betrifft eine Dichtungsanordnung zur Abdichtung eines Spaltes zwischen einem Maschinenelement und einem Gehäuse, umfassend zumindest ein Dichtelement, welches zumindest teilweise aus polymerem Werkstoff ausgebildet ist, wobei das Dichtelement ringförmig ausgebildet ist.

Dichtungen, insbesondere dynamisch beanspruchte Dichtungen nutzen sich über die vorgesehene Lebensdauer ab, wobei verschiedene Abnutzungsphänomene zum Tragen kommen. Durch Materialermüdung lässt die Kontaktspannung des Dichtelementes nach, ebenso nimmt die Anpresskraft ab. Durch Verschleiß und Setzverhalten ändern sich die Dimensionen des Dichtelementes. Diese Vorgänge führen dazu, dass es zunächst zu einer Leckage und anschließend zu einem Ausfall des Dichtsystems kommt.

Zur Leckage-Überwachung von Dichtungen ist es bekannt, in die Dichtung eine Einrichtung zur Leckage-Überwachung zu integrieren. Aus der DE 10 2007 007 405 B4 ist eine elektrische Einrichtung zur Erkennung des Verschleißzustandes eines dynamischen Dichtelementes bekannt. Das Dichtelement umfasst einen elektrisch leitfähigen Abschnitt und einen elektrisch nicht-leitfähigen Abschnitt, welcher mit dem abzudichtenden Maschinenelement in Kontakt steht. Das Maschinenelement ist ebenfalls elektrisch leitfähig. Durch Verschleiß des Dichtelementes nutzt sich das elektrisch nicht-leitende Dichtmaterial ab, so dass das elektrisch leitende Dichtmaterial in Kontakt mit dem Maschinenelement gelangt. Dabei schließt sich ein Stromkreis und es kann ermittelt werden, dass das Dichtelement verschlissen ist.

Bei dieser Ausgestaltung ist nachteilig, dass keine allmählichen Zustandsänderungen erfassbar sind. Es kann lediglich ermittelt werden, dass die Verschleißgrenze erreicht ist und dass das Dichtelement kurzfristig ausgetauscht werden muss.

In der US 2012/0119448 A1 ist beschrieben, wie der Verschleiß einer statischen Flachdichtung durch Kapazitätsmessung überwacht werden kann.

Der Erfindung liegt die Aufgabe zugrunde, eine Dichtungsanordnung bereitzustellen, welche eine permanente Zustandsüberwachung der Dichtfunktion ermöglicht und welche kostengünstig herstellbar und gleichzeitig einfach zu montieren ist.

Diese Aufgabe wird mit den Merkmalen von Anspruch 1 gelöst. Auf vorteilhafte Ausgestaltungen nehmen die Unteransprüche Bezug.

Die Dichtungsanordnung zur Abdichtung eines Spaltes zwischen einem Maschinenelement und einem Gehäuse umfasst zur Lösung der Aufgabe zumindest ein Dichtelement, welches zumindest teilweise aus polymerem Werkstoff ausgebildet ist, wobei das Dichtelement ringförmig ausgebildet ist, wobei das Dichtelement zumindest ein erstes ringförmiges Element und zumindest ein zweites ringförmiges Element aufweist, wobei das erste Element elektrisch leitfähig und das zweite Element elektrisch isolierend ausgebildet ist, wobei das erste Element axial zu dem zweiten Element angeordnet ist.

Es können die Elemente in einem Herstellungsprozess erzeugt und anschließend zu dem Dichtelement miteinander verbunden werden. Dies ist insbesondere dann vorteilhaft, wenn das Dichtelement aus einem Werkstoff besteht, welcher nicht spritzgießfähig ist. Ein derartiger Werkstoff ist beispielsweise PTFE. Insofern ist die erfindungsgemäße Dichtungsanordnung insbesondere dann vorteilhaft, wenn das Dichtelement aus PTFE ausgebildet ist.

Das besondere bei PTFE ist, dass bei einer Kombination eines leitfähigen und eines nicht leitfähigen PTFE-Materials im Sinterprozess eine sehr gute Haftung der beiden Materialien zueinander erreicht wird. Man bekommt eine gut stoffschlüssige Verbindung. Ein nachträgliches Verbinden der Werkstoffe hingegen ist sehr schwer.

Hierzu ist ein Kontaktelement außen auf dem Dichtelement angebracht. Unter Kontaktelement wird hierbei auch eine Kontaktfläche verstanden.

Das Gehäuse weist einen Einbauraum für das Dichtelement auf, wobei der Einbauraum mit einer eine Isolierung bildenden Auskleidung versehen ist. Insbesondere wenn das Maschinenelement als Welle ausgebildet ist, ist die Gehäuseöffnung zumeist kreisförmig ausgebildet. In diesem Fall ist der Einbauraum in Form einer ringförmigen Nut ausgebildet, in welcher das Dichtelement angeordnet ist.

Aus dem zweiten Element kann eine Dichtlippe ausgebildet sein, welche an dem Maschinenelement anliegt. Durch die Dichtlippe ergibt sich ein linienförmiger Kontakt zwischen Dichtelement und Maschinenelement und damit einhergehend eine verbesserte Dichtwirkung.

Der Werkstoff des ersten Elementes kann mit elektrisch leitfähigen Partikeln versehen sein. Als elektrisch leitfähige Partikel kommen insbesondere eisenhaltige oder kohlenstoffhaltige Partikeln in Betracht. Insbesondere ist es denkbar, dass das Dichtelement aus elastomerem Werkstoff ausgebildet ist, welcher mit elektrisch leitfähigen Partikeln versehen ist.

Das Dichtelement kann zumindest zwei Elemente aufweisen, wobei zwischen den beiden zweiten Elementen ein erstes Element angeordnet ist. Dabei kann aus beiden zweiten Dichtelementen jeweils eine Dichtlippe ausgebildet sein. Dadurch ergibt sich eine gleichmäßige Anpressung des Dichtelementes an das Maschinenelement. Dadurch verringert sich insbesondere die Gefahr des Verkantens des Dichtelementes. Des Weiteren können die Dichtlippen so angeordnet sein, dass diese in entgegensetze Richtungen abdichten. Insbesondere im Fall eines translatorisch bewegten Maschinenelementes ist dadurch eine bidirektionale Abdichtung möglich.

Es kann ein weiteres Dichtelement vorgesehen sein, welches eine radiale Vorspannung des Dichtelements an das Maschinenelement bewirkt. Dabei kann das weitere Maschinenelement als O-Ring ausgebildet sein. Das weitere Dichtelement ist dabei außenumfangsseitig auf dem Dichtelement angeordnet und verursacht eine radiale Anpressung des Dichtelements an das Maschinenelement. Bei dieser Ausgestaltung erfolgt eine Aktivierung des Dichtelementes durch das weitere Dichtelement.

Das weitere Dichtelement kann aus elastomerem Werkstoff ausgebildet sein und als Kontaktelement genutzt werden.

Einige Ausführungsbeispiele der Dichtungsanordnung werden nachfolgend anhand der Figuren näher erläutert. Diese zeigen, jeweils schematisch:
Fig. 1 eine nicht erfindungsgemäße Dichtungsanordnung mit Dichtelement und weiterem Dichtelement;
Fig. 2 eine Dichtungsanordnung mit Auskleidung des Einbauraums, aber ohne die Kontaktelemente;
Fig. 3 eine nicht erfindungsgemäße Dichtungsanordnung mit kapazitivem Messpfad
Fig. 4 eine nicht erfindungsgemäße Dichtungsanordnung mit zwei zweiten Elementen
Fig. 5 eine nicht erfindungsgemäße Dichtungsanordnung mit kapazitivem Messpfad
Fig. 6 ein nicht erfindungsgemäßes Dichtelement in Form eines federunterstützten Nutrings;
Fig. 7 ein nicht erfindungsgemäßes Dichtelement gemäß Fig. 6 mit Kontaktelementen
Fig. 8 ein nicht erfindungsgemäßes Dichtelement gemäß Fig. 6 mit Isolierung.

Die Figuren zeigen eine Dichtungsanordnung 1 zur Abdichtung eines Spaltes zwischen einem Maschinenelement 2 und einem Gehäuse 3. Dabei dichtet ein zwischen Maschinenelement 2 und Gehäuse 3 angeordnetes Dichtelement 4 den Spalt ab. Das Dichtelement 4 ist in einem in dem Gehäuse 3 eingebrachten Einbauraum 9 angeordnet. Der Einbauraum 9 ist in Form einer umlaufenden Nut ausgebildet.

Bei den vorliegenden Ausgestaltungen ist das Maschinenelement 2 ein rotatorisch und/oder translatorisch bewegliches Maschinenelement 2, beispielsweise eine Welle.

Das Dichtelement 4 besteht aus einem polymeren Kunststoff, hier aus PTFE.

Das Dichtelement 4 ist ringförmig ausgebildet, wobei das Dichtelement 4 zumindest ein erstes ringförmiges Element 5 und zumindest ein zweites ringförmiges Element 6 aufweist, wobei das erste Element 5 elektrisch leitfähig und das zweite Element 6 elektrisch isolierend ausgebildet ist, wobei das erste Element 5 axial benachbart zu dem zweiten Element 6 angeordnet ist. Das erste Element 5 ist stoffschlüssig an das zweite Element 6 angebunden.

Aus dem zweiten Element 6 ist eine Dichtlippe 7 ausgebildet, welche dichtend an dem Maschinenelement 2 anliegt. Der Werkstoff des ersten Elements 5 ist mit elektrisch leitfähigen Partikeln versehen.

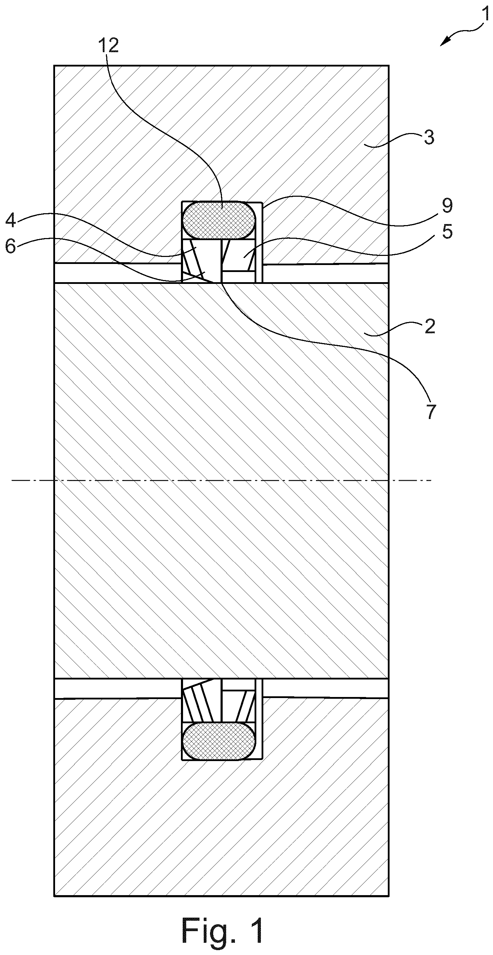

Figur 1 zeigt eine erste Ausgestaltung der Dichtungsanordnung 1. Dem Dichtelement 4 ist außenumfangsseitig ein weiteres Dichtelement 12 zugeordnet, welches eine radiale Anpressung des Dichtelementes 4 an das Maschinenelement 2 bewirkt. Das weitere Dichtelement 12 ist als O-Ring ausgebildet und besteht aus elektrisch isolierendem elastomeren Werkstoff. Der Werkstoff des weiteren Dichtelementes 12 kann alternativ mit elektrisch leitfähigen Partikeln versehen sein.

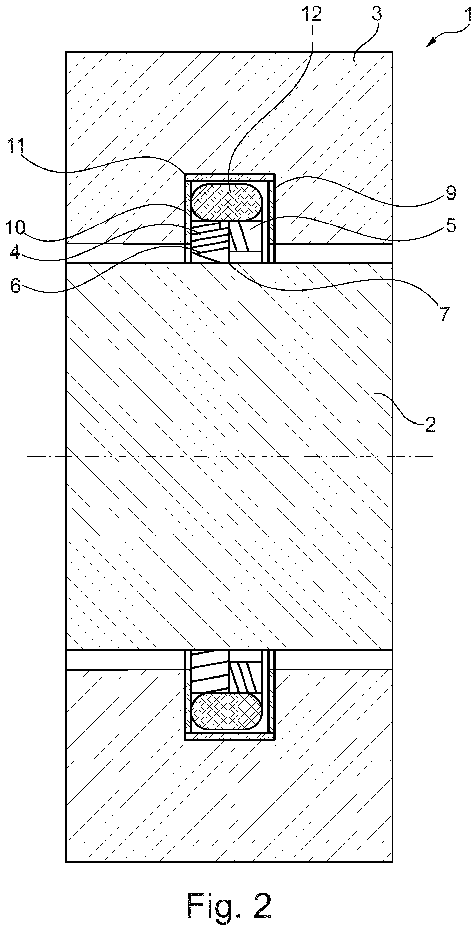

Figur 2 zeigt eine Dichtungsanordnung 1 gemäß Figur 1. Bei der vorliegenden Ausgestaltung ist erfindungsgemäß die Innenwand des Einbauraums mit einer Isolierung 10 versehen, welche eine elektrische Isolierung des Dichtelementes 4 gegenüber dem Gehäuse 3 bewirkt. Die Isolierung 10 ist in Form einer Auskleidung 11 ausgebildet und besteht aus polymerem Werkstoff.

Alternativ, aber nicht erfindungsgemäß, können auch die Elemente des Dichtelementes 4 und/oder des weiteren Dichtelementes 12 elektrisch isolierend ausgebildet sein. Hierfür kann beispielsweise eine Umhüllung vorgesehen sein.

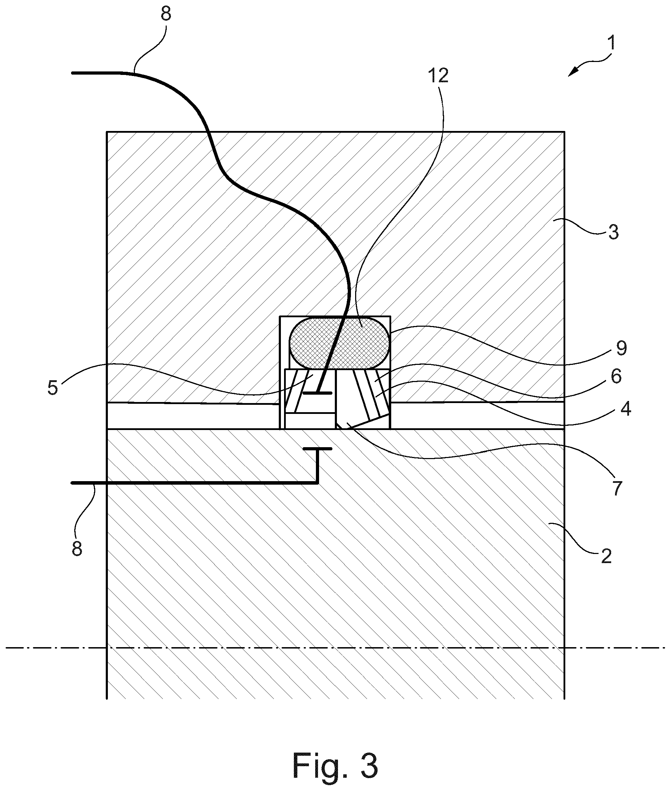

Figur 3 zeigt eine Dichtungsanordnung gemäß Figur 1. Zusätzlich ist hier der Messpfad 8 der kapazitiven Messung eingezeichnet. Die Verschleißmessung erfolgt durch Bestimmung der Kapazität zwischen den beiden Bauteilen Maschinenelement 2 und Element 5, wobei Zustandsänderungen der Dichtungsanordnung 1 durch Verschleiß und dergleichen mit einer Änderung der Kapazität einhergehen. Dabei kann auch eine kontinuierliche Zustandsänderung erfasst, so dass ein Monitoring der Dichtungsanordnung 1 möglich ist. Das Monitoring erfolgt mittels einer Auswerteeinheit, welche mit nicht dargestellten Kontaktelementen verbunden sein kann.

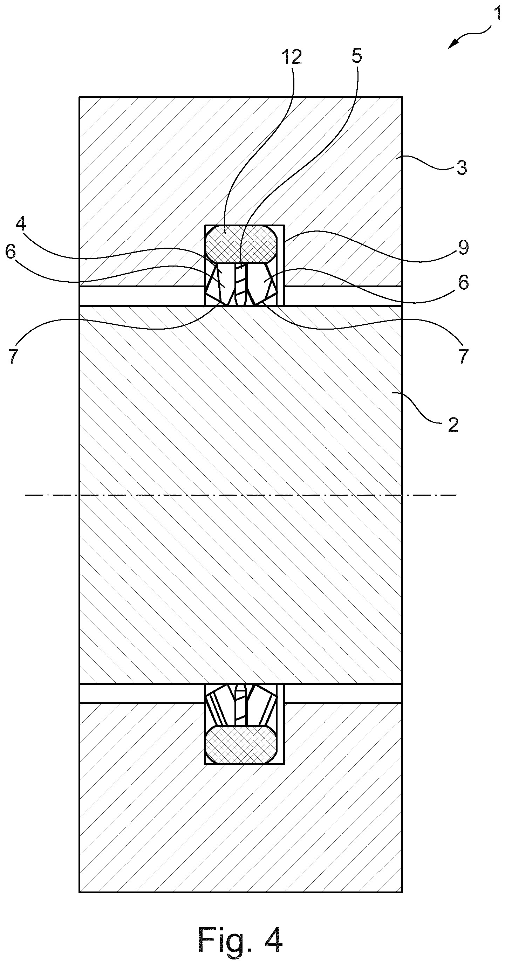

Figur 4 zeigt eine Dichtungsanordnung 1 gemäß Figur 1, wobei das Dichtelement 4 zwei zweite Elemente 6 aufweist, wobei zwischen den beiden zweiten Elementen 6 ein erstes Element 5 angeordnet ist.

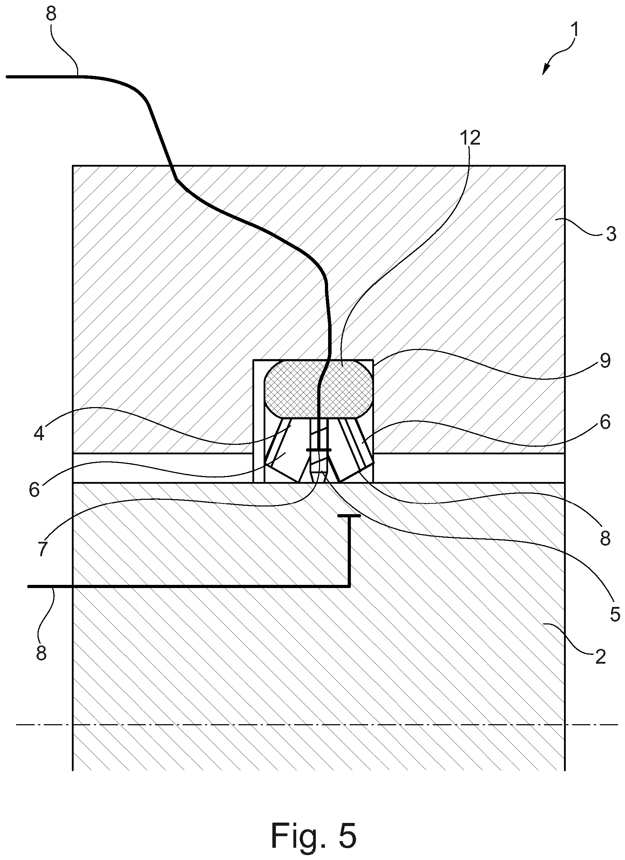

Figur 5 zeigt eine Dichtungsanordnung 1 gemäß Figur 4, in welcher der Messpfad zur kapazitiven Messung angedeutet ist.

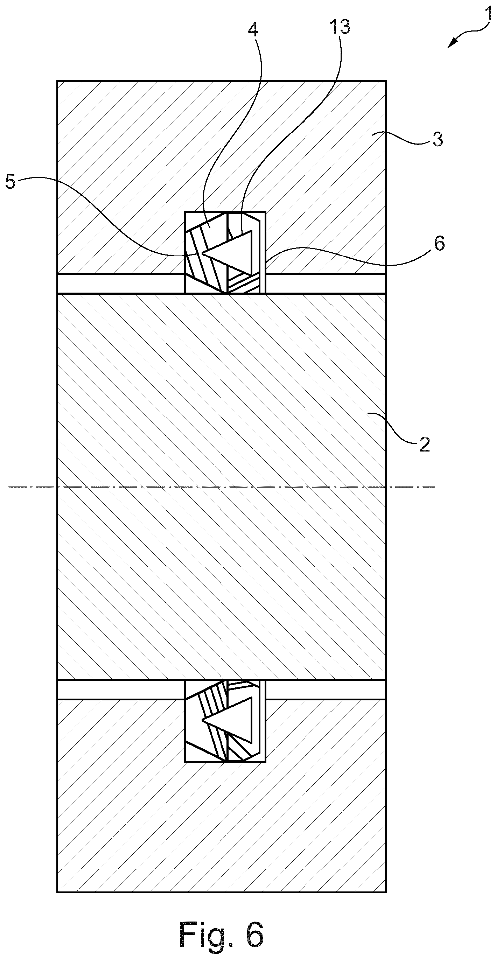

Figur 6 zeigt eine Dichtungsanordnung 1, bei welcher das Dichtelement 4 als Nutring ausgebildet, wobei der Nut des Nutrings ein Federelement 13 zugeordnet ist, welches eine radiale Anpressung des Dichtelementes 4 an das Maschinenelement 2 bewirkt. Das Dichtelement 4 ist aus PTFE ausgebildet und weist ein elektrisch leitfähiges erstes Element 5 und ein elektrisch isolierendes zweites Element 6 auf. Das Dichtelement 4 muss dabei gegenüber dem Gehäuse 3 isoliert sein.

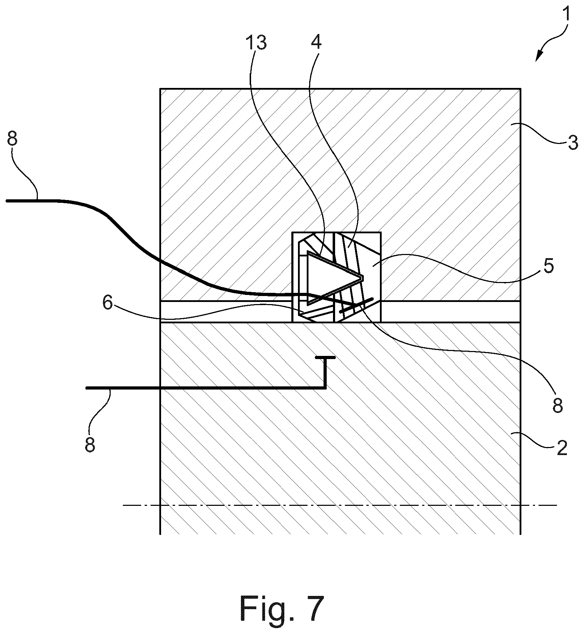

Figur 7 zeigt eine Dichtungsanordnung 1 gemäß Figur 6, wobei ebenfalls der Messpfad 8 zur kapazitiven Messung angedeutet ist, welche die Kapazität zwischen dem Maschinenelement 2 und dem ersten Element 5 mittels einer nicht dargestellten Auswerteeinheit erfasst.

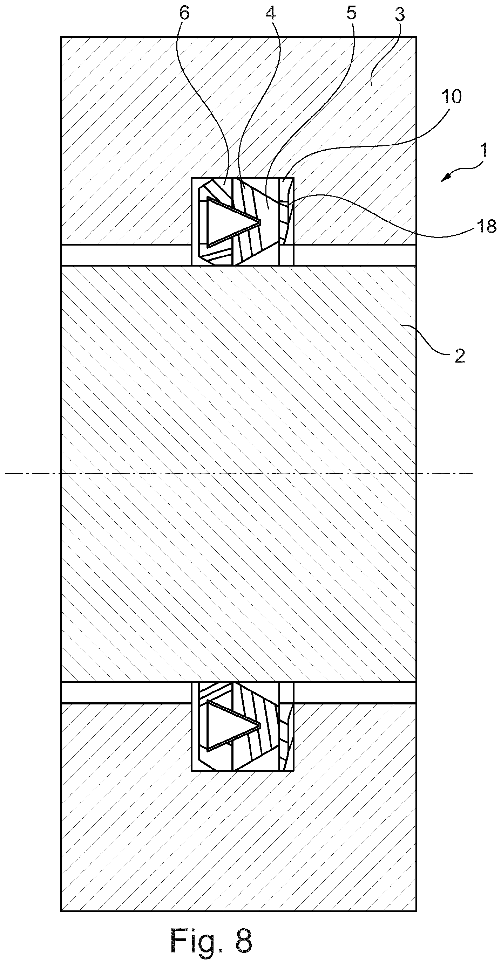

Figur 8 zeigt eine Dichtungsanordnung 1 gemäß Figur 6, wobei ein Kontaktelement 18 vorgesehen ist, welches in eine scheibenförmige Isolierung 10 eingebettet ist. Das Kontaktelement 18 liegt an dem zweiten Element 6 des Dichtelementes 4 an und kann in einem hier nicht dargestellten Messpfad 8 integriert sein.

## Patentansprüche

1. Dichtungsanordnung (1) zur Abdichtung eines Spaltes zwischen einem als Welle ausgebildeten Maschinenelement (2) und einem Gehäuse (3), umfassend das Gehäuse und zumindest ein Dichtelement (4), welches zumindest teilweise aus polymerem Werkstoff ausgebildet ist, wobei das Dichtelement (4) ringförmig und aus PTFE ausgebildet ist, wobei das Dichtelement (4) zumindest ein erstes ringförmiges Element (5) und zumindest ein zweites ringförmiges Element (6) aufweist, wobei das erste Element (5) elektrisch leitfähig und das zweite Element (6) elektrisch isolierend ausgebildet ist, wobei das erste Element (5) axial benachbart zu dem zweiten Element (6) angeordnet ist,
wobei das Dichtelement (4) mit elektrisch leitfähigen Kontaktelementen (18) versehen ist und
wobei das Gehäuse (3) einen Einbauraum (9) in Form einer ringförmigen Nut für das Dichtelement (4) aufweist, wobei der Einbauraum (9) mit einer eine Isolierung (10) bildenden Auskleidung (11) versehen ist.

2. Dichtungsanordnung nach Anspruch 1, **dadurch gekennzeichnet, dass** aus dem zweiten Element (6) eine Dichtlippe (7) ausgebildet ist, welche an dem Maschinenelement (2) anliegt.

3. Dichtungsanordnung nach einem der Ansprüche 1 bis 2, **dadurch gekennzeichnet, dass** der Werkstoff des ersten Elements (5) mit elektrisch leitfähigen Partikeln versehen ist.

4. Dichtungsanordnung nach einem der Ansprüche 1 bis 3, **dadurch gekennzeichnet, dass** das Dichtelement (4) zwei zweite Elemente (6) aufweist, wobei zwischen den beiden zweiten Elementen (6) ein erstes Element (5) angeordnet ist.

5. Dichtungsanordnung nach einem der Ansprüche 1 bis 4, **dadurch gekennzeichnet, dass** ein weiteres Dichtelement (12) vorgesehen ist, welches eine radiale Vorspannung des Dichtelementes (4) an das Maschinenelement (2) bewirkt.

6. Dichtungsanordnung nach Anspruch 5, **dadurch gekennzeichnet, dass** das weitere Dichtelement (12) aus elastomerem Werkstoff ausgebildet ist.

## Claims

1. Seal arrangement (1) for sealing a gap between a machine element (2) formed as a shaft and a housing (3), comprising the housing and at least one sealing element (4), which is formed at least partially from a polymeric material, wherein the sealing element (4) is in the form of a ring and is formed from PTFE, wherein the sealing element (4) has at least one first ring-shaped element (5) and at least one second ring-shaped element (6), wherein the first element (5) is formed to be electrically conductive and the second element (6) is formed to be electrically insulating, wherein the first element (5) is arranged axially adjacent to the second element (6),
wherein the sealing element (4) is provided with electrically conductive contact elements (18) and
wherein the housing (3) has an installation space (9) in the form of a ring-shaped groove for the sealing element (4), wherein the installation space (9) is provided with a lining (11) which forms insulation (10).

2. Seal arrangement according to Claim 1, **characterized in that** a sealing lip (7), which abuts against the machine element (2), is formed from the second element (6).

3. Seal arrangement according to one of Claims 1 or 2, **characterized in that** the material of the first element (5) is provided with electrically conductive particles.

4. Seal arrangement according to one of Claims 1 to 3, **characterized in that** the sealing element (4) has two second elements (6), wherein a first element (5) is arranged between the two second elements (6).

5. Seal arrangement according to one of Claims 1 to 4, **characterized in that** a further sealing element (12) is provided, which brings about a radial pre-tension of the sealing element (4) against the machine element (2).

6. Seal arrangement according to Claim 5, **characterized in that** the further sealing element (12) is formed from an elastomeric material.

## Revendications

1. Agencement d'étanchéité (1) pour étanchéifier un intervalle entre un élément de machine (2) réalisé sous forme d'arbre et un carter (3), comprenant le carter et au moins un élément d'étanchéité (4), qui est réalisé au moins partiellement en matériau polymère, l'élément d'étanchéité (4) étant réalisé sous forme annulaire et en PTFE, l'élément d'étanchéité (4) présentant au moins un premier élément annulaire (5) et au moins un deuxième élément annulaire (6), le premier élément (5) étant réalisé sous forme électriquement conductrice et le deuxième élément (6) étant réalisé sous forme électriquement isolante, le premier élément (5) étant agencé axialement au voisinage du deuxième élément (6), l'élément d'étanchéité (4) étant pourvu d'éléments de contact électriquement conducteurs (18) et
le carter (3) présentant un espace de montage (9) sous la forme d'une rainure annulaire pour l'élément d'étanchéité (4), l'espace de montage (9) étant pourvu d'un revêtement (11) formant une isolation (10).

2. Agencement d'étanchéité selon la revendication 1, **caractérisé en ce qu'**une lèvre d'étanchéité (7) est réalisée à partir du deuxième élément (6), laquelle s'applique contre l'élément de machine (2).

3. Agencement d'étanchéité selon l'une quelconque des revendications 1 à 2, **caractérisé en ce que** le matériau du premier élément (5) est pourvu de particules électriquement conductrices.

4. Agencement d'étanchéité selon l'une quelconque des revendications 1 à 3, **caractérisé en ce que** l'élément d'étanchéité (4) présente deux deuxièmes éléments (6), un premier élément (5) étant agencé entre les deux deuxièmes éléments (6).

5. Agencement d'étanchéité selon l'une quelconque des revendications 1 à 4, **caractérisé en ce qu'**un autre élément d'étanchéité (12) est prévu, qui provoque une précontrainte radiale de l'élément d'étanchéité (4) contre l'élément de machine (2).

6. Agencement d'étanchéité selon la revendication 5, **caractérisé en ce que** l'autre élément d'étanchéité (12) est réalisé en matériau élastomère.
